# EUROPÄISCHE PATENTSCHRIFT

(11) **EP 4 129 956 B1**
(45) Veröffentlichungstag und Bekanntmachung des Hinweises auf die Patenterteilung: **11.10.2023**
(21) Anmeldenummer: 21189477.9
(22) Anmeldetag: 03.08.2021
(51) Int. Cl.: C04B 41/87, C30B 25/02

(54) **VERFAHREN ZUR HERSTELLUNG VON BESCHICHTETEN SUBSTRATEN SOWIE BESCHICHTETES SUBSTRAT UND DESSEN VERWENDUNG**
COATED SUBSTRATE AND METHOD FOR PRODUCING COATED SUBSTRATES AND USE THEREOF
PROCÉDÉ DE FABRICATION DE SUBSTRATS REVÊTUS, AINSI QUE SUBSTRAT REVÊTU ET SON UTILISATION

(43) Veröffentlichungstag der Anmeldung: 08.02.2023
(73) Patentinhaber: Fraunhofer-Gesellschaft zur Förderung der angewandten Forschung e.V., 80686 München (DE)
(72) Erfinder: SCHUCK, Kevin, 91058 Erlangen (DE); REIMANN, Christian, 91058 Erlangen (DE); FRIEDRICH, Jochen, 91058 Erlangen (DE)
(74) Vertreter: Pfenning, Meinig & Partner mbB

(56) Entgegenhaltungen:
- WO-A2-2019/154690

## Beschreibung

Die vorliegende Erfindung betrifft ein Verfahren zur Herstellung von beschichteten Substraten. Im Verfahren wird zunächst eine wässrige Suspension hergestellt, die Wasser, mindestens einen Agglomeratbildner und Partikel mindestens eines Refraktärmetallcarbids enthält, wobei die Partikel des mindestens einen Refraktärmetallcarbids in der wässrigen Suspension Agglomerate bilden. Dann wird die mindestens eine wässrige Suspension auf ein poröses Substrat aufgebracht. Danach wird das Substrat einem Sinterprozess unterzogen. Erfindungsgemäß ist der Durchmesser jedes der Agglomerate größer als der Poreneingangsdurchmesser jeder der Poren des porösen Substrats. Die vorliegende Erfindung betrifft ferner ein beschichtetes Substrat, welches mit dem erfindungsgemäßen Verfahren hergestellt oder herstellbar sein kann, sowie die Verwendung eines solchen beschichteten Substrats.

Refraktärmetallcarbide wie beispielsweise Tantalcarbid (TaC) zeichnen sich im Allgemeinen durch ihre hohe mechanische, chemische und thermische Beständigkeit aus. Der Einsatz dieser Werkstoffe fokussiert sich v.a. auf Hochtemperaturanwendungen, z.B. in der Halbleiterkristallzüchtung, in denen stark korrosive und aggressive Spezies vorhanden sind und damit die Einsatzfähigkeit des bestehenden Bauteils (z.B. aus Graphit) eingeschränkt bzw. dessen Lebensdauer deutlich reduziert wird. Da es sich als schwierig gestaltet, mit Hilfe der aus der Literatur beschriebenen Prozesse zum Heißpressen ein bewährtes Volumenbauteil aus Refraktärmetallcarbiden kostengünstig und in komplexer Geometrie herzustellen, wird bevorzugt auf Beschichtungen zurückgegriffen. Die Herstellung von keramischen Schichten über das Heißpressen ist verfahrensbedingt nicht möglich. Beschichtungen werden beispielsweise über das CVD-Verfahren erzeugt. Dabei werden über die Gasphase dichte Schichten von wenigen Mikrometern auf ein Substrat abgeschieden. Ein Beispiel dazu wären TaC-Beschichtungen im Einlagenaufbau. Das kostenintensive Verfahren verwehrt allerdings, dass beschichtete Bauteile mit beliebigen Geometrien und Größen mit beliebiger Schichtdicke realisiert werden können. Um eine größere Flexibilität in diesen Bereichen zu gewährleisten, gibt es die Möglichkeit, die Schichten über ein nasskeramisches Verfahren (Tauchen, Pinseln oder Versprühen) auf das Substrat aufzutragen. Dies kann beispielsweise über eine Suspension auf Basis von organischen Lösungsmitteln erreicht werden (siehe z.B. US 2013/0061800 A1). Für die Erzeugung der gewünschten Schutzschichteigenschaften wird dem Auftragungsprozess über eine Ausgangssuspension ein Sinterprozess nachgeschaltet.

Neben der Erzeugung einer mechanisch stabilen Beschichtung durch den abschließenden Sinterprozess (hohe Abrieb- und Haftfestigkeit) wird gleichzeitig ein hoher Verdichtungsgrad gefordert, um das Substrat optimal vor korrosiven Medien in der Hochtemperaturanwendung zu schützen. Zusätzlich zu der Forderung eines hohen Verdichtungsgrads wird ebenso verlangt, dass die Ausbildung von Rissen in der Beschichtung nach dem Sintervorgang auf ein Minimum reduziert ist, um schlussendlich die Schutzschichteigenschaften der Refraktärmetallcarbid-Beschichtung zu gewährleisten und das Grundsubstrat maximal vor korrosiven Medien in der Hochtemperaturanwendung zu schützen. Risse können während des Sinterprozesses z.B. beim Verdichtungs- bzw. Schrumpfungsvorgang oder auch beim Abkühlen entstehen. Die Schrumpfungsrisse können dadurch vermieden werden, dass die aufgetragenen Grünschichten einen gleichmäßigen bzw. homogen dicken Verlauf zeigen und somit eine gleichmäßige Verdichtung stattfinden kann. Bei Inhomogenitäten im Schichtverlauf (wie z.B. Depressionen) bilden sich leicht Schrumpfungsrisse, die sich im weiteren Verlauf des Sinterprozesses oder später auch unter Einsatzbedingungen vertikal bzw. lateral ausbreiten können. Die Rissbildung beim Abkühlen ist auf den Abbau von zu hohen thermischen Zugspannungen zurückzuführen, die durch den meist großen Unterschied im thermischen Ausdehnungskoeffizienten zwischen der Refraktärmetallcarbid-Beschichtung und dem Grundsubstrat induziert werden.

Der Erhalt eines homogenen Schichtverlaufs wird bei der Suspensions-basierten Beschichtung von porösen Substraten, wie z.B. CFC-Substraten, mit Refraktärmetallcarbid-Beschichtungen jedoch durch das starke Infiltrationsverhalten der porösen Substrate und die daraus resultierende Infiltration der Poren durch die Suspension erschwert und führt so zu einem inhomogenen Verlauf der Refraktärmetallcarbid-Beschichtungen.

Die WO 2019/154690 A2 betrifft wässrige Suspensionen enthaltend Metallcarbid-Partikel und Dispergierungsmittel sowie ein Verfahren zur Beschichtung von Substraten unter Verwendung dieser wässrigen Suspensionen und außerdem die über das Verfahren herstellbaren beschichteten Substrate sowie deren Verwendungen.

Ausgehend hiervon war es die Aufgabe der vorliegenden Erfindung ein Verfahren zur Herstellung von beschichteten Substraten anzugeben, mit dem Substrate mit einer möglichst homogen verlaufenden Refraktärmetallcarbid-Beschichtung erhalten werden können. Zudem war es die Aufgabe der vorliegenden Erfindung beschichte Substrate bereitzustellen, die eine möglichst homogen verlaufende Refraktärmetallcarbid-Beschichtung aufweisen.

Diese Aufgabe wird bezüglich eines Verfahrens zur Herstellung von beschichteten Substraten mit den Merkmalen des Patentanspruchs 1 und bezüglich eines beschichteten Substrats mit den Merkmalen des Patentanspruchs 12 gelöst. In Patentanspruch 15 werden Verwendungsmöglichkeiten des erfindungsgemäßen beschichteten Substrats angegeben. Die abhängigen Patentansprüche stellen vorteilhafte Weiterbildungen dar.

Erfindungsgemäß wird somit ein Verfahren zur Herstellung von beschichteten Substraten angegeben, bei welchem
a) mindestens eine wässrige Suspension hergestellt wird, die Wasser, mindestens einen Agglomeratbildner und Partikel mindestens eines Refraktärmetallcarbids enthält, wobei die Partikel des mindestens einen Refraktärmetallcarbids in der wässrigen Suspension Agglomerate bilden,
b) die mindestens eine wässrige Suspension auf ein poröses Substrat aufgebracht wird, und
c) das Substrat nach Schritt b) einem Sinterprozess unterzogen wird,
wobei der Durchmesser jedes der Agglomerate größer ist als der Poreneingangsdurchmesser jeder der Poren des porösen Substrats.

In Schritt a) des erfindungsgemäßen Verfahrens wird zunächst mindestens eine wässrige Suspension hergestellt. Die mindestens eine wässrige Suspension enthält Wasser, mindestens einen Agglomeratbildner und Partikel mindestens eines Refraktärmetallcarbids. Unter einem Agglomeratbildner kann hierbei ein Stoff verstanden werden, der die Bildung von Agglomeraten beeinflusst. Vorzugsweise ist der mindestens eine Agglomeratbildner ausgewählt aus der Gruppe bestehend aus Tetrabutylammoniumhydroxid, Polyvinylalkoholen und Mischungen hiervon. Die mindestens eine wässrige Suspension kann auch aus Wasser, mindestens einem Agglomeratbildner und Partikeln mindestens eines Refraktärmetallcarbids bestehen. Vorzugsweise handelt es sich bei dem mindestens einen Refraktärmetallcarbid um Tantalcarbid.

In Schritt b) des erfindungsgemäßen Verfahrens wird die mindestens eine (in Schritt a) hergestellte) wässrige Suspension auf ein poröses Substrat aufgebracht. Die mindestens eine wässrige Suspension kann auf einem Teilbereich oder mehreren Teilbereichen (beispielsweise auf einer oder mehreren Oberflächen) des porösen Substrats oder auf dem gesamten porösen Substrat (bzw. der gesamten Oberfläche des porösen Substrats) aufgebracht werden. Die mindestens eine wässrige Suspension kann schichtförmig auf dem porösen Substrat aufgebracht werden. Die so aufgebrachte Schicht (bzw. die so aufgebrachten Schichten) der mindestens einen wässrigen Suspension kann (bzw. können) als Grünschicht (bzw. Grünschichten) bezeichnet werden.

Vorzugsweise wird Schritt b) direkt im Anschluss an Schritt a) durchgeführt.

Bei dem porösen Substrat kann es sich vorzugsweise um ein Kohlenstoff-Substrat, besonders bevorzugt um ein Graphit-Substrat, ganz besonders bevorzugt um ein iso-Graphit-Substrat, handeln. Unter iso-Graphit wird dabei Graphit verstanden, der nach dem Verfahren des isostatischen Pressens hergestellt wurde. Beispielsweise kann das poröse Substrat ein Tiegel, vorzugsweise ein Kohlenstoff-Tiegel, besonders bevorzugt ein Graphit-Tiegel, ganz besonders bevorzugt ein iso-Graphit-Tiegel, sein.

Vorzugsweise weisen die Poren des porösen Substrats einen mittleren Poreneingangsdurchmesser im Bereich von 0,1 µm bis 5 µm, bevorzugt von 0,5 µm bis 5 µm, (vorzugsweise an der Oberfläche) auf. Der mittlere Poreneingangsdurchmesser (vorzugsweise an der Oberfläche) kann beispielsweise bestimmt werden mittels Quecksilberintrusion (DIN 66133:1993-06) oder mittels Quecksilberporosimetrie (DIN 15901-1:2019-03).

Vorzugsweise weist das poröse Substrat eine offene Porosität im Bereich von 5 % bis 20 % auf. Die offene Porosität kann beispielsweise bestimmt werden mittels Quecksilberintrusion (DIN 66133:1993-06).

In Schritt c) des erfindungsgemäßen Verfahrens wird das Substrat nach Schritt b) einem Sinterprozess unterzogen. Durch den Sinterprozess wird mindestens eine das mindestens eine Refraktärmetallcarbid enthaltende Schutzschicht aus der (in Schritt b) aufgebrachten) mindestens einen wässrigen Suspension hergestellt. Mit anderen Worten wird die mindestens eine (in Schritt b) aufgebrachte) wässrige Suspension durch den Sinterprozess in eine Schutzschicht umgewandelt, die das mindestens eine Refraktärmetallcarbid enthält.

Das erfindungsgemäße Verfahren ermöglicht die Herstellung von Refraktärmetallcarbid-basierten Schichten auf Substraten, die als Hochtemperatur- und Verschleißschutzschichten bzw. Verschleißschutzschichtsysteme dienen können.

Beim erfindungsgemäßen Verfahren handelt es sich um ein nasskeramisches Verfahren zur Herstellung von Refraktärmetallcarbid-basierten Beschichtungen auf Substraten. Im Gegensatz zu über CVD- oder PVD-Verfahren hergestellten Schichten, zeigen die über nasskeramische Verfahren hergestellten Schichten eine isotrope Textur mit zufälliger Korngrößenorientierung, was zu einer verminderten Anfälligkeit für Rissbildung und zu einer Erhöhung des Diffusionswegs für substratschädigende Spezies führt. Aufgrund dessen weisen die erfindungsgemäß hergestellten beschichteten Substrate im Vergleich zu über CVD- oder PVD-Verfahren hergestellten beschichteten Substraten einen verbesserten Schutz gegenüber in Hochtemperaturanwendungen verwendeten aggressiven Substanzen auf. Zudem ist das erfindungsgemäße nasskeramische Verfahren kostengünstiger als CVD- oder PVD-Verfahren und bietet zudem mehr Flexibilität bei den Geometrien und Größen der herstellbaren beschichteten Bauteile sowie der Schichtdicken der aufgebrachten Beschichtungen bzw. Schichten.

Ferner basiert das erfindungsgemäße Verfahren zur Herstellung beschichteter Substrate auf der Verwendung einer wässrigen Suspension. Gegenüber der Verwendung organischer Suspensionen hat die Verwendung wässriger Suspensionen diverse Vorteile. So sind wässrige Suspensionen im Gegensatz zu organischen Suspensionen kostengünstig, aus ökologischer und gesundheitlicher Sicht unbedenklich und bringen auch nicht das sicherheitstechnische Problem leicht entflammbarer Sprühnebel mit sich. Außerdem kann bei der Verwendung wässriger Suspensionen auf eine Pyrolyse zur Entfernung organischer Lösemittel verzichtet werden, die zu einem unerwünschten Eintrag von Fremdstoffen in die Beschichtung führen kann. Weiterhin ist bei der Verwendung wässriger Suspensionen im Gegensatz zur Verwendung der bekannten organischen Suspensionen ein kontrollierter Auftrag der Suspension möglich. So ist insbesondere beim Sprühauftrag der bekannten organischen Suspensionen kein kontrollierter Auftrag möglich, da die Suspensionseigenschaften während dieses Vorgangs durch Verdampfung des Lösemittels schwanken können, so dass über die Zeit keine homogenen Schichten erhalten werden können.

Aufgrund des Sinterprozesses handelt es sich bei der im erfindungsgemäßen Verfahren erhaltenen Schutzschicht um eine mechanisch stabile Beschichtung mit hoher Abrieb- und Haftfestigkeit. Zudem wird durch den Sinterprozess ein höherer Verdichtungsgrad gegenüber der Ausgangsdichte nach dem Auftragen (Gründichte) erzielt.

Durch die Anwesenheit des mindestens einen Agglomeratbildners in der mindestens einen wässrigen Suspension wird eine kontrollierte Bildung von Agglomeraten der Refraktärmetallcarbid-Partikel in der mindestens einen wässrigen Suspension gefördert. Hierbei wird vor allem erreicht, dass die Partikel nicht unkontrolliert agglomerieren, sondern stattdessen Agglomerate in einem relativ engen Größenbereich gebildet werden, d.h. Agglomerate die alle eine ähnliche Größe aufweisen. Durch einen engen Größenbereich der gebildeten Agglomerate kann erreicht werden, dass sich die Größe einzelner gebildeter Agglomerate nicht zu stark von der durchschnittlichen Größe der gebildeten Agglomerate unterscheidet. Auf diese Weise kann verhindert werden, dass einzelne der gebildeten Agglomerate einen zu kleinen Durchmesser aufweisen.

Mithilfe des Agglomeratbildners kann zudem auch die Größe der Agglomerate bzw. der Größenbereich der Agglomerate gezielt gesteuert und eingestellt werden, da die Größe bzw. der Größenbereich der Agglomerate vom gewichtsprozentualen Anteil des Agglomeratbildners in der wässrigen Suspension abhängt. Je höher der gewichtsprozentuale Anteil des Agglomeratbildners ist, desto geringer ist der Durchmesser der Agglomerate. Vorzugsweise enthält die mindestens eine wässrige Suspension 0,1 bis 2 Gew.-%, besonders bevorzugt 0,1 bis 1 Gew.-%, des mindestens einen Agglomeratbildners, bezogen auf das Gesamtgewicht der wässrigen Suspension. Mit einem solchen Anteil an Agglomeratbildner können relativ große Agglomerate (d.h. Agglomerate mit einem relativ hohen Durchmesser) in einem relativ engen Größenbereich erhalten werden.

Abhängig von der Stabilität der Einzelpartikel in Suspension, die beeinflusst wird durch die gezielte Hinzugabe eines Agglomeratbildners, kann die Agglomeratgröße, zudem gemessen an der Standzeit der Suspension, gezielt eingestellt werden. Je länger die Standzeit der Suspension, desto besser sind die Einzelpartikel stabilisiert und desto kleiner sind die Agglomerate. Ohne die gezielte Hinzugabe eines Agglomeratbildners ist durch die unkontrollierte und starke Agglomeratbildung ein Versprühen der Suspension kaum oder nur sehr kurzweilig möglich.

Erfindungsgemäß ist der Durchmesser jedes der Agglomerate größer als der Poreneingangsdurchmesser jeder der Poren des porösen Substrats. Auf diese Weise wird erreicht, dass keines der Agglomerate in eine der Poren des porösen Substrats gelangen kann. In der Folge kann verhindert werden, dass das mindestens eine Refraktärmetallcarbid beim Auftragen der mindestens einen wässrigen Suspension auf das poröse Substrat in die Poren des Substrats gelangt, was letztlich zur Ausbildung einer homogenen Schutzschicht führt.

Würden das Refraktärmetallcarbid bzw. die Agglomerate der Refraktärmetallcarbid-Partikel in die Poren des porösen Substrats gelangen, würde dies zu Inhomogenitäten innerhalb der Schicht führen. Bei solchen Inhomogenitäten im Schichtverlauf (wie z.B. Depressionen) bilden sich leicht Schrumpfungsrisse, die sich im weiteren Verlauf des Sinterprozesses oder später auch unter Einsatzbedingungen vertikal bzw. lateral ausbreiten können. Die Rissbildung beim Abkühlen ist auf den Abbau von zu hohen thermischen Zugspannungen zurückzuführen, die durch den meist großen Unterschied im thermischen Ausdehnungskoeffizienten zwischen der Refraktärmetallcarbid-Beschichtung und dem (z.B. Kohlenstoff-basierten) Grundsubstrat induziert werden.

Durch die im erfindungsgemäßen Verfahren vorgesehene kontrollierte Agglomerat-Bildung, bei welcher der Durchmesser jedes der Agglomerate größer ist als der Poreneingangsdurchmesser jeder der Poren des porösen Substrats, kann nun eine sehr homogene (bzw. gleichmäßige) Beschichtung erhalten werden, da ein Eindringen des Refraktärmetallcarbids in die Poren des porösen Substrats verhindert werden kann. Durch den sehr homogenen (bzw. gleichmäßigen) Verlauf der Schicht können Schrumpfungsrisse innerhalb der Schutzschicht vermieden werden. Dies ist auch deshalb der Fall, da durch den gleichmäßigen bzw. homogenen Schichtverlauf eine gleichmäßige Verdichtung stattfinden kann. Je weniger Schrumpfungsrisse in der erhaltenen Schutzschicht vorhanden sind, desto besser ist das Substrat durch die Schutzschicht (z.B. vor korrosiven Medien in Hochtemperaturanwendungen) geschützt. Durch das erfindungsgemäße Verfahren kann somit eine sehr homogene und nur geringfügig rissbehaftete (oder sogar rissfreie) Refraktärmetallcarbid-Schutzschicht erhalten werden, die das Substrat effektiv vor Fremdeinflüssen (wie z.B. vor korrosiven Medien in Hochtemperaturanwendungen) schützen kann.

Mittels REM-Aufnahmen am hergestellten beschichteten Substrat kann nachgewiesen werden, dass die Poren des beschichteten Substrats ungefüllt sind und keines der Agglomerate der Partikel des mindestens einen Refraktärmetallcarbids in die Poren des Substrats gelangt ist. Hieraus kann geschlossen werden, dass der Durchmesser jedes der Agglomerate größer ist als der Poreneingangsdurchmesser jeder der Poren des porösen Substrats. Mittels REM-Aufnahmen kann somit das Vorliegen des Merkmals, dass der Durchmesserjedes der Agglomerate größer ist als der Poreneingangsdurchmesser jeder der Poren des porösen Substrats, nachgewiesen werden.

Das mit dem erfindungsgemäßen Verfahren herstellbare beschichtete Substrat kann beispielsweise als Gallium-Verdampfer bzw. Teil eines Gallium-Verdampfers in einem zur Züchtung von Galliumnitrid-Halbleiterkristallen verwendbaren VPE-GaN-Reaktor eingesetzt werden, wobei das im erfindungsgemäßen Verfahren erhaltene Schichtsystem dann als Beschichtung des Gallium-Verdampfers fungiert.

Eine bevorzugte Variante des erfindungsgemäßen Verfahrens zeichnet sich dadurch aus, dass
- das poröse Substrat ein Material enthält oder aus diesem besteht, welches ausgewählt ist aus der Gruppe bestehend aus Graphit, bevorzugt iso-Graphit, kohlenfaserverstärktem Kohlenstoff (CFC), C/SiC-Faserverbundwerkstoffen, SiC/SiC-Faserverbundwerkstoffen, carbidischen Keramiken, nitridischen Keramiken, oxidischen Keramiken, und Mischungen hiervon, und/oder
- das mindestens eine Refraktärmetallcarbid ausgewählt ist aus der Gruppe bestehend aus Titancarbiden, Zirconiumcarbiden, Hafniumcarbiden, Vanadiumcarbiden, Niobcarbiden, Tantalcarbiden, Chromcarbiden, Molybdäncarbiden, Wolframcarbiden, und Mischungen hiervon, und/oder
- der mindestens eine Agglomeratbildner ausgewählt ist aus der Gruppe bestehend aus Tetrabutylammoniumhydroxid, Polyvinylalkoholen und Mischungen hiervon.

Ganz besonders bevorzugt handelt es sich beim dem mindestens einen Refraktärmetallcarbid um Tantalcarbid. Tantalcarbid ermöglicht eine besonders gute Schutzwirkung für das poröse Substrat.

Das poröse Substrat kann vorzugsweise ein Material enthalten oder aus diesem bestehen, welches ausgewählt ist aus der Gruppe bestehend aus Graphit, bevorzugt iso-Graphit, carbidischen Keramiken, nitridischen Keramiken, oxidischen Keramiken, und Mischungen hiervon.

Das poröse Substrat kann vorzugsweise ein Material enthalten oder aus diesem bestehen, welches ausgewählt ist aus der Gruppe bestehend aus Graphit, bevorzugt iso-Graphit, kohlenfaserverstärktem Kohlenstoff (CFC), C/SiC-Faserverbundwerkstoffen, SiC/SiC-Faserverbundwerkstoffen, und Mischungen hiervon.

Kohlenstoff-basierte Substrate und SiC-basierte Substrate zeigen beim Auftragen einer wässrigen Suspension ein erhöhtes Infiltrationsverhalten. In der Folge ist das erfindungsgemäße Verfahren besonders für solche Substrate geeignet.

Ganz besonders bevorzugt enthält das poröse Substrat Graphit, bevorzugt iso-Graphit, oder besteht daraus.

Mit einem Agglomeratbildner ausgewählt aus der Gruppe bestehend aus Tetrabutylammoniumhydroxid, Polyvinylalkoholen und Mischungen hiervon kann eine sehr kontrollierte Agglomerat-Bildung erreicht werden, bei welcher gebildeten Agglomerate eine Größe in einem besonders engen Größenbereich aufweisen können.

Vorzugsweise weisen die Poren des porösen Substrats einen mittleren Poreneingangsdurchmesser von maximal 1,5 µm, bevorzugt im Bereich von 0,1 µm bis 1,5 µm, besonders bevorzugt im Bereich von 0,5 µm bis 1,5 µm auf. Der mittlere Poreneingangsdurchmesser kann beispielsweise bestimmt werden mittels Quecksilberporosimetrie (DIN 15901-1:2019-03) oder mittels Quecksilberintrusion (DIN 66133:1993-06). Durch einen solch niedrigen mittleren Poreneingangsdurchmesser kann besser verhindert werden, dass die Agglomerate der Refraktärmetallcarbid-Partikel in die Poren des porösen Substrats gelangen.

Vorzugsweise enthält das poröse Substrat ein Material enthält oder besteht aus diesem, welches eine mittlere Korngröße von maximal 5 µm aufweist. Die mittlere Korngröße kann beispielsweise bestimmt werden mittels Laserbeugung (DIN 13320:2020-01). Die mittlere Korngröße hat Einfluss auf das Infiltrationsverhalten des porösen Substrats. Durch eine mittlere Korngröße von maximal 5 µm kann besser verhindert werden, dass die Agglomerate der Refraktärmetallcarbid-Partikel in die Poren des porösen Substrats gelangen.

Eine weitere bevorzugte Variante des erfindungsgemäßen Verfahrens ist dadurch gekennzeichnet, dass
- der Durchmesser (jedes) der Agglomerate mindestens 20 µm, bevorzugt mindestens 10 µm, besonders bevorzugt mindestens 5 µm, beträgt, und/oder
- der Poreneingangsdurchmesser (jeder) der Poren des porösen Substrats höchstens 19 µm, bevorzugt höchstens 9 µm, besonders bevorzugt höchstens 4 µm, beträgt.

Vorzugsweise kann der Durchmesser der Agglomerate mindestens 20 µm und der Poreneingangsdurchmesser der Poren des porösen Substrats höchstens 19 µm betragen. Besonders bevorzugt kann der Durchmesser der Agglomerate mindestens 10 µm und der Poreneingangsdurchmesser der Poren des porösen Substrats höchstens 9 µm betragen. Ganz besonders bevorzugt kann der Durchmesser der Agglomerate mindestens 5 µm und der Poreneingangsdurchmesser der Poren des porösen Substrats höchstens 4 µm betragen.

Die Durchmesser der Agglomerate und die Poreneingangsdurchmesser der Poren des porösen Substrats können z.B. anhand von REM-Aufnahmen bestimmt werden.

Die Bestimmung der Mindestgröße der Agglomerate kann auch indirekt über die Bestimmung der Poreneingangsdurchmesser der Poren des Substrats erfolgen, da von der Tatsache ausgehend, dass keine der Poren gefüllt ist, darauf geschlossen werden kann, dass der Durchmesser der Agglomerate größer sein muss als die Poreneingangsdurchmesser der Poren des Substrats. Zudem kann die Größe der Agglomerate auch über Standzeit-Versuche der gezielt hergestellten Suspensionen abgeschätzt werden.

Gemäß einer weiteren bevorzugten Variante des erfindungsgemäßen Verfahrens erfolgt die Herstellung der mindestens einen wässrigen Suspension in Schritt a) dadurch, dass zunächst eine Mischung hergestellt wird, die die Komponenten der herzustellenden wässrigen Suspension enthält, und die Mischung dann für eine Standzeit von 3 Minuten bis 30 Minuten, bevorzugt von 5 Minuten bis 15 Minuten, besonders bevorzugt von 5 Minuten bis 10 Minuten, ohne Rühren stehen gelassen wird.

Dadurch, dass die Mischung ohne Rühren für eine Standzeit von 3 Minuten bis 30 Minuten, bevorzugt von 5 Minuten bis 15 Minuten, besonders bevorzugt von 5 Minuten bis 10 Minuten, stehen gelassen wird, kann eine besonders stabile Suspension mit Agglomeraten in einem gewünschten engen Größenbereich erhalten werden, bei welcher die Agglomerate nahezu komplett stabilisiert vorliegen. Auf diese Weise kann noch besser verhindert werden, dass sich einzelne Agglomerate bilden, die einen Durchmesser aufweisen, der kleiner als die Poreneingangsdurchmesser der Poren des porösen Substrats ist.

Eine weitere bevorzugte Variante des erfindungsgemäßen Verfahrens zeichnet sich dadurch aus, dass die mindestens eine wässrige Suspension 0,05 bis 1 Gew.-% mindestens eines Bindemittels, bezogen auf das Gesamtgewicht der wässrigen Suspension, enthält, wobei das mindestens eine Bindemittel vorzugsweise ausgewählt ist aus der Gruppe bestehend aus Polyvinylalkoholen, Natriumbiphenyl-2-yloxiden, und Mischungen hiervon.

Durch das Bindemittel wird die Fließgrenze der Partikel erhöht, sodass diese während des Auftragens in der Schwebe gehalten werden. Dies hat zur Folge, dass die auf das Substrat aufgebrachte wässrige Suspension trocknen kann, ohne dass das Substrat infiltriert wird. Auf diese Weise kann auch besser verhindert werden, dass die Agglomerate der Refraktärmetallcarbid-Partikel in die Poren des porösen Substrats gelangen.

Die mindestens ein wässrige Suspension kann mindestens eine Bindemittel ausgewählt aus der Gruppe bestehend aus Polyvinylalkoholen, Natriumbiphenyl-2-yloxiden, Polyphenyloxid, und Mischungen hiervon enthalten, wobei das mindestens eine Bindemittel vorzugweise zu einem Anteil von 0,05 bis 1 Gew.-% oder von 0,01 bis 5 Gew.-%, bezogen auf das Gesamtgewicht der wässrigen Suspension, in der mindestens einen wässrigen Suspension enthalten sein kann.

Gemäß einer weiteren bevorzugten Variante des erfindungsgemäßen Verfahrens weist die Oberfläche des porösen Substrats, auf welcher die mindestens eine wässrige Suspension abgeschieden wird,
- einen Mittenrauwert auf, der maximal 3 µm, bevorzugt von 0,5 µm bis 3 µm, besonders bevorzugt von 1 µm bis 3 µm, beträgt, und/oder
- eine gemittelte Rautiefe auf, die maximal 12 µm, bevorzugt von 1 µm bis 12 µm, besonders bevorzugt von 3 µm bis 12 µm, beträgt.

Durch Verwendung eines porösen Substrats mit solch einem Mittenrauwert und/oder solche einer gemittelten Rautiefe kann eine noch homogenere Beschichtung erhalten werden.

Der Mittenrauwert kann beispielsweise bestimmt werden mittels optischer Interferometrie und Auswertung nach DIN EN ISO 25178:2016-12.

Die gemittelte Rautiefe kann beispielsweise bestimmt werden mittels optischer Interferometrie und Auswertung nach DIN EN ISO 25178:2016-12.

Gemäß einer weiteren bevorzugten Variante des erfindungsgemäßen Verfahrens ist die mittlere Partikelgröße der Partikel des mindestens einen Refraktärmetallcarbids größer als der mittlere Poreneingangsdurchmesser der Poren des porösen Substrats. Auf diese Weise wird erreicht, dass die Partikel des mindestens einen Refraktärmetallcarbids von sich aus bereits so groß sind, dass alle oder zumindest ein Großteil von Ihnen nicht in die Poren gelangen kann. Auf diese Weise kann noch besser verhindert werden, dass die Agglomerate der Refraktärmetallcarbid-Partikel in die Poren des porösen Substrats gelangen.

Vorzugsweise weisen die Poren des porösen Substrats einen mittleren Poreneingangsdurchmesser von maximal 1,2 µm, bevorzugt im Bereich von 0,1 µm bis 1,2 µm, besonders bevorzugt im Bereich von 0,5 µm bis 1,2 µm auf.

Vorzugsweise liegt die mittlere Partikelgröße (d50-Wert) der Partikel des mindestens einen Refraktärmetallcarbids im Bereich von 2 µm bis 50 µm, bevorzugt in einem Bereich von 3 µm bis 30 µm, liegt.

Die mittlere Partikelgröße (d50-Wert) der Partikel des mindestens einen Refraktärmetallcarbids kann beispielsweise bestimmt werden mittels Laserbeugung (DIN 13320:2020-01).

Weiterhin ist es bevorzugt, dass
- die mittlere Partikelgröße (d50-Wert) der Partikel des mindestens einen Refraktärmetallcarbids in einem Bereich von 0,2 µm bis 5 µm, bevorzugt von 0,5 µm bis 4 µm, besonders bevorzugt von 0,8 µm bis 2,5 µm, liegt und der mittlere Poreneingangsdurchmesser der Poren des porösen Substrats maximal 1,2 µm, bevorzugt im Bereich von 0,1 µm bis 1,2 µm, besonders bevorzugt im Bereich von 0,5 µm bis 1,2 µm, beträgt, wobei vorzugsweise das Substrat ein Material enthält oder aus diesem besteht, welches eine mittlere Korngröße von maximal 5 µm aufweist, oder
- die mittlere Partikelgröße (d50-Wert) der Partikel des mindestens einen Refraktärmetallcarbids in einem Bereich von 2 µm bis 50 µm, bevorzugt in einem Bereich von 3 µm bis 30 µm, besonders bevorzugt von 5 µm bis 20 µm liegt und der mittlere Poreneingangsdurchmesser der Poren des porösen Substrats mehr als 1,2 µm beträgt, wobei vorzugsweise das Substrat ein Material enthält oder aus diesem besteht, welches eine mittlere Korngröße von mehr als 5 µm aufweist.

Eine weitere bevorzugte Variante des erfindungsgemäßen Verfahrens zeichnet sich dadurch aus, dass zusätzlich zu der in Schritt a) hergestellten mindestens einen wässrigen Suspension mindestens eine weitere wässrige Suspension hergestellt wird, die das mindestens eine partikulär vorliegende Refraktärmetallcarbid und Wasser enthält, und nach Schritt b) die mindestens eine weitere wässrige Suspension auf die in Schritt b) (z.B. in Form einer Schicht) aufgebrachte mindestens eine aufgebrachte wässrige Suspension aufgebracht wird, wobei die Partikel des in der in Schritt a) hergestellten wässrigen Suspension enthaltenen mindestens einen Refraktärmetallcarbids einen mittleren Partikeldurchmesser in einem Bereich von 5 µm bis 50 µm aufweisen und die Partikel des in der weiteren wässrigen Suspension enthaltenen mindestens einen Refraktärmetallcarbids einen mittleren Partikeldurchmesser in einem Bereich von 0,2 µm bis 2 µm aufweisen. Mit einem solchen Mehrlagenschichtaufbau können sowohl die Homogenität der Schichtdicke der Refraktärmetallcarbid-Schicht(en) gefördert als auch mögliche Nachteile im Sinterverfahren vermieden werden. So kann durch die Refraktärmetallcarbid-Partikel mit einem relativ großen Durchmesser im Bereich von 5 bis 50 µm in der direkt auf dem Substrat aufgebrachten Schicht noch besser verhindert werden, dass die Agglomerate der Refraktärmetallcarbid-Partikel in die Poren des porösen Substrats gelangen. Gleichzeitig kann durch die Refraktärmetallcarbid-Partikel mit einem relativ kleinen Durchmesser im Bereich von 0,2 bis 2 µm in der weiteren Schicht erreicht werden, dass diese Refraktärmetallcarbid-Partikel besser versintert werden können, da Refraktärmetallcarbid-Partikel mit großer Partikelgröße schlechter versintern.

Eine weitere bevorzugte Variante des erfindungsgemäßen Verfahrens ist dadurch gekennzeichnet, dass die Herstellung der mindestens einen wässrigen Suspension in Schritt a) ein Vermischen der Komponenten der herzustellenden mindestens einen wässrigen Suspension mithilfe eines Dispergiergeräts umfasst, wobei das Vermischen mithilfe des Dispergiergeräts vorzugsweise unter Verwendung von Mahlkörpern und/oder über einen Zeitraum von mindestens 12 Stunden erfolgt.

Durch Vermischen der Komponenten mithilfe eines Dispergiergeräts unter vorzugsweiser Verwendung von Mahlkörpern und/oder über einen Zeitraum von mindestens 12 Stunden kann eine optimale Durchmischung der wässrigen Suspension erreicht werden, sodass Inhomogenitäten in der Verteilung und somit in der Verdichtung noch besser vermieden werden können. Beispielsweise können beim Vermischen mit dem Dispergiergerät Umdrehungsgeschwindigkeiten bis zu 1m/s verwendet werden.

Gemäß einer weiteren bevorzugten Variante des erfindungsgemäßen Verfahrens erfolgt das Aufbringen der mindestens einen wässrigen Suspension in Schritt b) mittels Tauchen, Pinseln oder Sprühauftragung. Besonders bevorzugt erfolgt das Aufbringen der mindestens einen wässrigen Suspension in Schritt b) mittels Sprühauftragung. Für die Herstellung von einer oder mehrerer dünner, schnelltrocknender Refraktärmetallcarbid-Schichten, vorzugsweise mit Schichtdicken im Bereich von 20 µm bis 80 µm, ist die Sprühauftragung die bevorzugte Wahl. Dabei kann durch eine schnelle Rotation des Bauteils durch den Sprühstrahl eine sehr dünne Suspensionsschicht auf der Oberfläche aufgebracht werden, die je nach Feststoffgehalt der Suspension schnell bis sehr schnell trocknen kann. Bevorzugt sind dabei Feststoffgehalte des Refraktärmetallcarbid-Pulvers größer gleich 70 Gew.-% von der Gesamtsuspension. Jede aufzutragende Einzellage sollte vorzugsweise ein vergleichbares Trocknungsverhalten zeigen. Grundsätzlich wird ein schnelltrocknendes Verhalten der aufgetragenen Suspensionsschichten bevorzugt, da Dichteunterschiede zwischen Refraktärmetallcarbid und Sinteradditiv zu einer Inhomogenität in der Verteilung der Partikel führen kann, wenn die Schichten zu lange trocknen.

Gemäß einer beispielhaften bevorzugten Variante kann in Schritt b) mindestens eine Schicht der wässrigen Suspension mit einer mittleren Schichtdicke von weniger als 150 µm, bevorzugt von 20 µm bis 100 µm, besonders bevorzugt von 30 µm bis 80 µm, auf dem porösen Substrat aufgebracht werden.

Gemäß einer alternativen beispielhaften bevorzugten Variante kann in Schritt b) mindestens eine Schicht der wässrigen Suspension mit einer mittleren Schichtdicke von weniger als 50 µm, bevorzugt von weniger als 30 µm, auf dem porösen Substrat aufgebracht werden.

Eine weitere bevorzugte Variante des erfindungsgemäßen Verfahrens zeichnet sich dadurch aus, dass die mindestens eine wässrige Suspension
- 60 bis 90 Gew.-%, bevorzugt 70 bis 85 Gew.-%, der Partikel des mindestens einen Refraktärmetallcarbids, bezogen auf das Gesamtgewicht der wässrigen Suspension, und/oder
- 0,1 bis 2 Gew.-%, bevorzugt 0,1 bis 1 Gew.-%, des mindestens einen Agglomeratbildners, bezogen auf das Gesamtgewicht der wässrigen Suspension, enthält.

Gemäß einer weiteren bevorzugten Ausführungsvariante kann die mindestens eine wässrige Suspension ein Sinteradditiv enthalten, welches vorzugsweise ausgewählt ist aus der Gruppe bestehend aus Silicium, Zirconiumborid, Refraktärmetallsiliciden sowie Mischungen hiervon. Es hat sich gezeigt, dass diese Sinteradditive aufgrund ihrer Eigenschaften (z.B. Schmelzpunkte, Siedepunkte, etc.) zumindest den gleichen oder sogar einen besseren Effekt auf den Verdichtungsgrad wie die im Stand der Technik als Sinteradditive verwendeten Übergangsmetalle (z.B. Cobalt, Nickel, Eisen, etc.) haben. Es kann somit durch deren Verwendung ein hoher Verdichtungsgrad der gesinterten Schicht erreicht werden, wodurch das Substrat sehr gut vor korrosiven Medien in Hochtemperaturanwendungen geschützt wird. Die genannten Sinteradditive zeichnen sich gegenüber den im Stand der Technik verwendeten Sinteradditiven, wie z.B. Cobalt, zunächst dadurch aus, dass sie sicherheitstechnisch und gesundheitlich unbedenklich sind. Zudem wird durch deren Verwendung und somit die Vermeidung von Übergangsmetallen als Sinteradditive verhindert, dass diese Übergangsmetalle als Verunreinigung in der Schicht erhalten bleiben, was bei einer Verwendung des beschichteten Substrats in Hochtemperaturanwendungen bei der Halbleiterkristallzüchtung schädlich für die dortige Züchtungsatmosphäre wäre.

Verfahren nach einem der vorhergehenden Ansprüche, dadurch gekennzeichnet, dass der Sinterprozess in Schritt c)
- bei einer Temperatur von 2100 °C bis 2500 °C, bevorzugt von 2200 °C bis 2400 °C, und/oder
- mit einer Haltezeit von 1 h bis 15 h, bevorzugt von 2 h bis 10 h, und/oder
- bei einem Druck von 0,1 bar bis 10 bar, bevorzugt 0,7 bar bis 5 bar, und/oder
- unter Argon-Atmosphäre,
erfolgt.

Durch diese Ausgestaltungen des Sinterprozesses kann einerseits erreicht werden, dass die erhaltene Schutzschicht eine besonders hohe mechanische Stabilität mit einer besonders hohen Abrieb- und Haftfestigkeit aufweist. Zudem wird durch diese Ausgestaltungen des Sinterprozesses die Stabilität der Schmelzphase über den gesamten Sinterprozess erhöht.

Die vorliegende Erfindung betrifft ferner ein beschichtetes Substrat, umfassend ein poröses Substrat und mindestens eine auf dem porösen Substrat angeordnete Schicht, die mindestens ein Refraktärmetallcarbid enthält oder daraus besteht, wobei die mindestens eine auf dem porösen Substrat angeordnete Schicht ein Korngefüge aus isometrischen Körnern aufweist, und wobei das poröse Substrat ungefüllte Poren aufweist, die durch die mindestens eine auf dem porösen Substrat angeordnete Schicht verschlossen sind.

Unter isometrischen Körnern werden Körner mit einem Kornaspektverhältnis von mindestens 0,95 verstanden. Beispielweise können die isometrischen Körner ein Kornaspektverhältnis von mindestens 0,99, insbesondere von 1, aufweisen.

Ein Korngefüge aus isometrischen Körnern kommt nur bei durch Suspensionsabscheidung erhaltenen Schichten nicht jedoch bei durch CVD-Verfahren erhaltenen Schicht vor. In der Folge unterscheidet sich das erfindungsgemäße beschichte Substrat aufgrund des Korngefüge aus isometrischen Körnern, das die mindestens eine auf dem porösen Substrat angeordnete Schicht aufweist, von mittels CVD-Verfahren beschichteten Substraten.

Mittels REM-Aufnahmen des beschichteten Substrats (bzw. eines Querschliff davon) kann nachgewiesen werden, dass das poröse Substrat ungefüllte Poren aufweist, die durch die mindestens eine auf dem porösen Substrat angeordnete Schicht verschlossen sind.

Aufgrund des Merkmals, dass das poröse Substrat ungefüllte Poren aufweist, die durch die mindestens eine auf dem porösen Substrat angeordnete Schicht verschlossen sind, kann die mindestens eine auf dem porösen Substrat angeordnete Schicht sehr homogen und nur geringfügig rissbehaftet (oder sogar rissfrei) erhalten werden, so dass die mindestens eine auf dem porösen Substrat angeordnete Schicht das poröse Substrat besser vor Fremdeinflüssen (wie z.B. vor korrosiven Medien in Hochtemperaturanwendungen) schützen kann.

Eine bevorzugte Ausführungsform des erfindungsgemäßen beschichteten Substrats zeichnet sich dadurch aus, dass die mindestens eine auf dem porösen Substrat angeordnete Schicht eine mittlere Schichtdicke von mindestens 20 µm, bevorzugt von 20 µm bis 150 µm, besonders bevorzugt von 30 µm bis 100 µm, aufweist.

Eine bevorzugte Ausführungsform des erfindungsgemäßen beschichteten Substrats ist dadurch gekennzeichnet, dass die Standardabweichung der mittleren Schichtdicke der mindestens einen auf dem porösen Substrat angeordneten Schicht maximal 6 % beträgt, bevorzugt im Bereich von 0,5 % bis 6 % liegt, besonders bevorzugt im Bereich von 1 % bis 6 % liegt.

Ganz besonders bevorzugt ist, dass die mindestens eine auf dem porösen Substrat angeordnete Schicht eine mittlere Schichtdicke von mindestens 20 µm, bevorzugt von 20 µm bis 150 µm, besonders bevorzugt von 30 µm bis 100 µm aufweist und die Standardabweichung der mittleren Schichtdicke der mindestens einen auf dem porösen Substrat angeordneten Schicht maximal 6 % beträgt, bevorzugt im Bereich von 0,5 % bis 6 % liegt, besonders bevorzugt im Bereich von 1 % bis 6 % liegt.

Die Standardabweichung der mittleren Schichtdicke ist ein Maß für die Homogenität (bzw. Gleichmäßigkeit) der Schichtdicke der Schicht. Je geringer die Standardabweichung der mittleren Schichtdicke der mindestens einen auf dem porösen Substrat angeordneten Schicht ist, desto homogener (bzw. gleichmäßiger) ist auch die Schichtdicke der mindestens einen auf dem porösen Substrat angeordneten Schicht.

Anhand von Querschliffen kann der optische Verlauf der auf dem porösen Substrat angeordneten Schicht, die mindestens ein Refraktärmetallcarbid enthält oder daraus besteht, auf klassische Weise dargestellt und ausgewertet werden. Hierbei kann eine optische Betrachtung des Querschliffs und die qualitative Einordnung in ein homogenes oder inhomogenes Schichtsystem vorgenommen werden.

Die mittlere Schichtdicke der mindestens einen auf dem porösen Substrat angeordneten Schicht kann ebenfalls anhand von Querschliffen des beschichteten Substrats bestimmt werden. So wird die mittlere Schichtdicke bestimmt, in dem eine Vielzahl von Punktmessungen an dem Schichtquerschliff durchgeführt werden, woraus dann eine Standardabweichung berechnet werden kann, die zusätzlich eine quantitative Einschätzung über die Homogenität des Schichtverlaufs liefert.

Beispielsweise ist die Quantifizierung der Homogenität über die Standardabweichung der Schichtdicke auf folgende Weise möglich:
- Herstellung eines Querschliffs von beschichtetem Substrat (d.h. Schicht + Substrat)
- Messung der Distanz zwischen Grenzfläche und Schichtoberfläche (Schichtdicke) anhand von aufgenommenen Querschliffsbildern
- Schichtdickenanalyse in einem Bereich mit maximaler Ausdehnung von z.B. 4 cm
- Anzahl der Schichtdicken-Einzelmessungen beträgt mindestens 25 pro 1 cm Messbereich
- Abstand der Schichtdicken-Einzelmessungen ist regelmäßig
- Ermittlung der Standardabweichung über alle Schichtdicken-Einzelmessungen
- Beispielsweise kann bei einer Standardabweichung von ≤ 6 % angenommen werden, dass eine homogene Schicht vorliegt.

Ohne eine aufwändige Querschliffpräparation durchzuführen, kann anhand der Draufsicht schon eine schnelle, qualitative Aussage über die Homogenität der Schicht getroffen werden.

Eine weitere bevorzugte Ausführungsform des erfindungsgemäßen beschichteten Substrats zeichnet sich dadurch aus, dass
- das poröse Substrat ein Material enthält oder aus diesem besteht, welches ausgewählt ist aus der Gruppe bestehend aus Graphit, bevorzugt iso-Graphit, kohlenfaserverstärktem Kohlenstoff (CFC), C/SiC-Faserverbundwerkstoffen, SiC/SiC-Faserverbundwerkstoffen, carbidischen Keramiken, nitridischen Keramiken, oxidischen Keramiken, und Mischungen hiervon, und/oder
- das mindestens eine Refraktärmetallcarbid ausgewählt ist aus der Gruppe bestehend aus Titancarbiden, Zirconiumcarbiden, Hafniumcarbiden, Vanadiumcarbiden, Niobcarbiden, Tantalcarbiden, Chromcarbiden, Molybdäncarbiden, Wolframcarbiden, und Mischungen hiervon.

Ganz besonders bevorzugt handelt es sich beim dem mindestens einen Refraktärmetallcarbid um Tantalcarbid.

Das poröse Substrat kann vorzugsweise ein Material enthalten oder aus diesem bestehen, welches ausgewählt ist aus der Gruppe bestehend aus Graphit, bevorzugt iso-Graphit, carbidischen Keramiken, nitridischen Keramiken, oxidischen Keramiken, und Mischungen hiervon.

Das poröse Substrat kann vorzugsweise ein Material enthalten oder aus diesem bestehen, welches ausgewählt ist aus der Gruppe bestehend aus Graphit, bevorzugt iso-Graphit, kohlenfaserverstärktem Kohlenstoff (CFC), C/SiC-Faserverbundwerkstoffen, SiC/SiC-Faserverbundwerkstoffen, und Mischungen hiervon.

Ganz besonders bevorzugt enthält das poröse Substrat Graphit, bevorzugt iso-Graphit, oder besteht daraus.

Bei dem porösen Substrat kann es sich vorzugsweise um ein Kohlenstoff-Substrat, besonders bevorzugt um ein Graphit-Substrat, ganz besonders bevorzugt um ein iso-Graphit-Substrat, handeln. Unter iso-Graphit wird dabei Graphit verstanden, der nach dem Verfahren des isostatischen Pressens hergestellt wurde. Beispielsweise kann das poröse Substrat ein Tiegel, vorzugsweise ein Kohlenstoff-Tiegel, besonders bevorzugt ein Graphit-Tiegel, ganz besonders bevorzugt ein iso-Graphit-Tiegel, sein.

Gemäß einer weiteren bevorzugten Ausführungsform des erfindungsgemäßen beschichteten Substrats umfasst das beschichtete Substrat mindestens eine weitere Schicht, wobei die mindestens eine weitere Schicht unmittelbar auf der auf dem porösen Substrat angeordneten Schicht angeordnet ist und mindestens ein Refraktärmetallcarbid enthält oder daraus besteht.

Eine weitere bevorzugte Ausführungsform des erfindungsgemäßen beschichteten Substrats zeichnet sich dadurch aus, dass das beschichtete Substrat mit dem erfindungsgemäßen Verfahren herstellbar oder hergestellt ist.

Ferner betrifft die vorliegende Erfindung auch die Verwendung des erfindungsgemäßen beschichteten Substrats in der Halbleiterkristallzüchtung, wobei es sich bei dem beschichteten Substrat vorzugsweise um einen beschichteten Tiegel handelt.

Die vorliegende Erfindung wird anhand der nachfolgenden Figuren und Beispiele näher erläutert, ohne die Erfindung auf die speziell dargestellten Parameter zu beschränken.

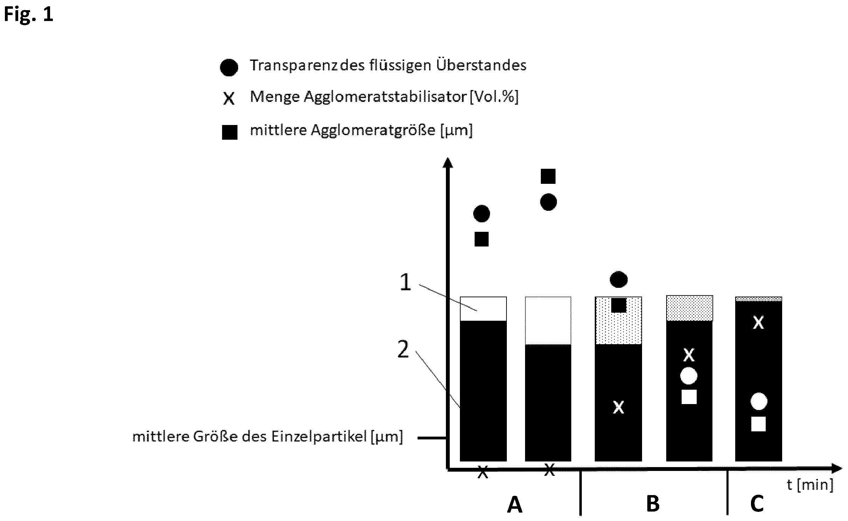

In Fig. 1 wird schematisch die Agglomerat-Bildung erläutert. Es werden dort fünf Suspensionen enthaltend Wasser und Partikel mindestens eines Refraktärmetallcarbids gezeigt, die einen Überstand 1 sowie einem Agglomerathaltigen Anteil 2 aufweisen und unter verschiedenen Bedingungen hergestellt wurden. Die drei rechten Suspensionen in Bereich B und C enthalten zusätzlich mindestens einen Agglomeratbildner (bzw. Agglomeratstabilisator), wobei der Anteil des Agglomeratbildners variiert. Die beiden linken Suspensionen enthalten keinen Agglomeratbildner. Die bei der Herstellung der jeweiligen Suspension verwendete Standzeit nimmt von links nach rechts zu.

In Bereich A sind zwei Suspensionen dargestellt, bei deren Herstellung kein Agglomeratbildner verwendet wurde. Schon bei einer Standzeit von 1 bis max. 2 Minuten findet hier eine unkontrollierte, zufällige und starke Agglomeratbildung mit breiter Größenverteilung statt. Zu keinem Zeitpunkt liegen die Einzelpartikel stabilisiert vor.

In Bereich B sind zwei Suspensionen dargestellt, bei deren Herstellung ein Agglomeratbildner in verschiedenen Konzentrationen verwendet wurde. Bis zu einer Standzeit von 5 Minuten liegen hier die Einzelpartikel stabilisiert vor. Ab einer Standzeit von min. 5 Minuten bis max. 15 Minuten findet hier eine Agglomeratbildung gezielt in einem gewollt engen Größenbereich statt.

In Bereich C ist eine Suspension dargestellt, bei deren Herstellung ein Agglomeratbildner in einer höheren Konzentration als in den beiden Suspensionen in Bereich B verwendet wurde. Bis zu einer Standzeit von mindestens 15 Minuten liegen hier die Einzelpartikel nahezu komplett stabilisiert vor. Ab einer Standzeit von min. 15 Minuten findet eine geringe Agglomeratbildung gezielt in einem gewollt sehr engen Größenbereich statt.

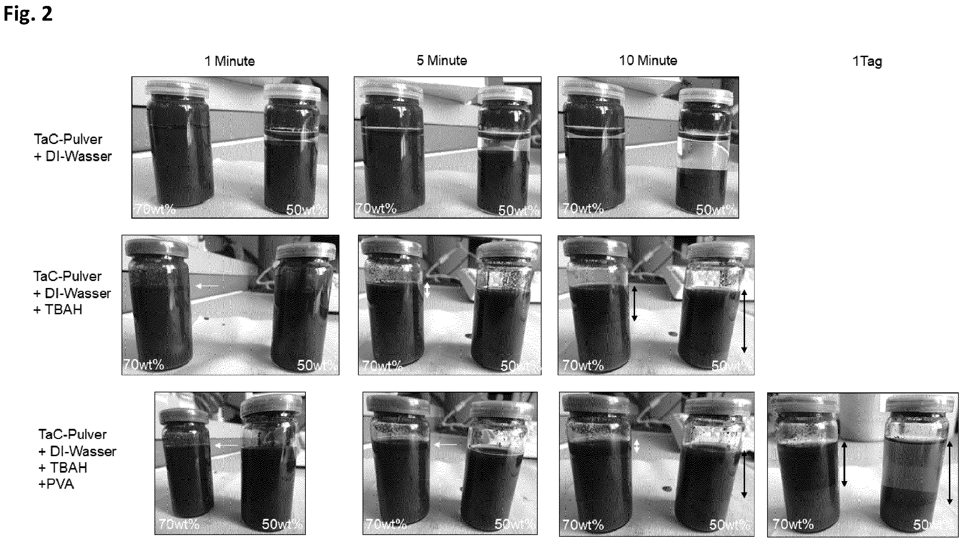

In Fig. 2 werden Fotos von auf verschiedene Weisen hergestellten Suspensionen gezeigt. Die Suspensionen auf den drei oberen Fotos enthalten Wasser und Tantalcarbid-Partikel. Die Suspensionen auf den drei Fotos in der mittleren Reihe enthalten Wasser und Tantalcarbid-Partikel sowie zusätzlich Tetrabutylammoniumhydroxid als Agglomeratbildner. Die Suspensionen auf den vier unteren Fotos enthalten Wasser und Tantalcarbid-Partikel sowie zusätzlich eine Mischung aus Tetrabutylammoniumhydroxid und Polyvinylalkohol als Agglomeratbildner. Auf jedem der Fotos enthält jeweils die linke Suspension 70 Gew.-% Tantalcarbid-Partikel und jeweils die rechte Suspension 50 Gew.-% Tantalcarbid-Partikel. Die zur Herstellung der Suspension verwendete Standzeit nimmt von links nach rechts zu und ist über den Fotos angegeben. Abhängig von der Stabilität der Einzelpartikel in Suspension, die beeinflusst wird durch die gezielte Hinzugabe eines Agglomeratbildners, kann die Agglomeratgröße, gemessen an der Standzeit der Suspension, gezielt eingestellt werden. Je länger die Standzeit der Suspension, desto besser sind die Einzelpartikel stabilisiert und desto kleiner sind die Agglomerate. Ohne die gezielte Hinzugabe eines Agglomeratbildners ist durch die unkontrollierte und starke Agglomeratbildung ein Versprühen der Suspension kaum oder nur sehr kurzweilig möglich.

### Ausführungsbeispiel 1

Zunächst wird eine wässrige Suspension hergestellt, in dem eine Mischung hergestellt wird, die aus 80 Gew.-% TaC-Pulver, 0,1 Gew.-% Tetrabutylammoniumhydroxid, 1 Gew.-% Polyvinylalkohol und 18,9 Gew.-% Wasser besteht, und die Mischung dann für eine Standzeit von 12 Minuten ohne Rühren stehen gelassen wird. Hierbei bilden die TaC-Partikel des TaC-Pulvers in der wässrigen Suspension Agglomerate. Die so hergestellte wässrige Suspension wird schichtförmig auf ein poröses Graphit-Substrat (mittlerer Poreneingangsdurchmesser: 0,6 µm, Korngröße: 2 µm, Rₐ: 1,5 µm) aufgebracht. Im Anschluss wird das mit der wässrigen Suspension versehene Substrat einem Sinterprozess unterzogen, welcher bei einer Temperatur von 2300 °C, mit einer Haltezeit von 10 h und bei einem Druck von 1 bar erfolgt.

Auf diese Weise wird ein beschichtetes Graphit-Substrat erhalten, das ein poröses Graphit-Substrat und eine darauf angeordnete TaC-Schutzschicht umfasst. Die TaC-Schicht weist ein Korngefüge aus isometrischen Körnern auf.

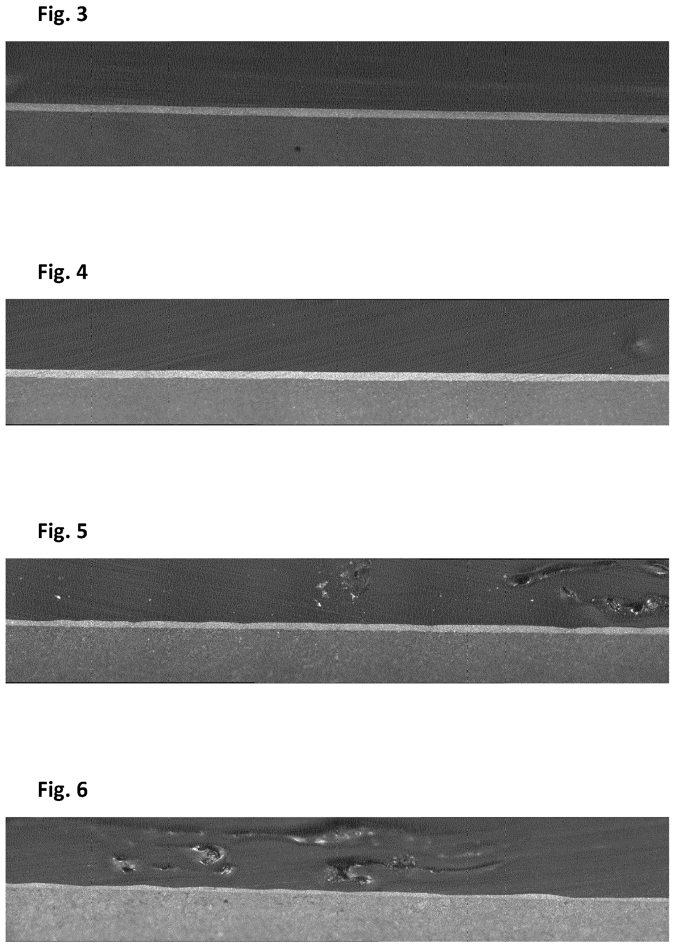

Zur Untersuchung des beschichteten Substrats wird ein Querschliff des beschichteten Substrats hergestellt. Ein Bild dieses Querschliffs ist in Fig. 3 dargestellt.

Mittels einer REM-Aufnahme des Querschliffs kann ermittelt werden, dass die Poren des porösen Substrats ungefüllt sind und durch die TaC-Schicht verschlossen sind. Hieraus kann abgeleitet werden, dass keines der Agglomerate der wässrigen Suspension in die Poren des porösen Substrats gelangt ist und somit jedes der Agglomerate größer ist als der Poreneingangsdurchmesser jeder der Poren des porösen Substrats.

Ferner werden anhand des Querschliffs die mittlere Schichtdicke der TaC-Schicht sowie die Standardabweichung der mittleren Schichtdicke bestimmt. Hierfür werden an mindestens 25 Messstellen pro 1 cm Messbereich der Schicht Schichtdicken-Einzelmessungen vorgenommen, indem die Distanz zwischen Grenzfläche und Schichtoberfläche (Schichtdicke) anhand von aufgenommenen Querschliffsbildern gemessen wird, wobei die Abstände zwischen den einzelnen Messstellen regelmäßig sind. Auf diese Weise wird für die mittlere Schichtdicke der TaC-Schicht ein Wert von 55,9 µm bestimmt. Zudem wird eine Standardabweichung über alle Schichtdicken-Einzelmessungen von 2,5 µm (4,5 %) ermittelt.

Da die Standardabweichung nicht mehr als 6 % beträgt, handelt es sich bei der TaC-Schicht somit um eine homogene Schicht.

### Ausführungsbeispiel 2

Zunächst wird eine wässrige Suspension hergestellt, in dem eine Mischung hergestellt wird, die aus 80 Gew.-% TaC-Pulver, 0,1 Gew.-% Tetrabutylammoniumhydroxid, 1 Gew.-% Polyvinylalkohol und 18,9 Gew.-% Wasser besteht, und die Mischung dann für eine Standzeit von 12 Minuten ohne Rühren stehen gelassen wird. Hierbei bilden die TaC-Partikel des TaC-Pulvers in der wässrigen Suspension Agglomerate. Die so hergestellte wässrige Suspension wird schichtförmig auf ein poröses Graphit-Substrat (mittlerer Poreneingangsdurchmesser: 0,6 µm, Korngröße: 3 µm, Rₐ: 1,5 µm) aufgebracht. Im Anschluss wird das mit der wässrigen Suspension versehene Substrat einem Sinterprozess unterzogen, welcher bei einer Temperatur von 2300 °C, mit einer Haltezeit von 10 h und bei einem Druck von 1 bar erfolgt.

Auf diese Weise wird ein beschichtetes Graphit-Substrat erhalten, das ein poröses Graphit-Substrat und eine darauf angeordnete TaC-Schutzschicht umfasst. Die TaC-Schicht weist ein Korngefüge aus isometrischen Körnern auf.

Zur Untersuchung des beschichteten Substrats wird ein Querschliff des beschichteten Substrats hergestellt. Ein Bild dieses Querschliffs ist in Fig. 4 dargestellt.

Mittels einer REM-Aufnahme des Querschliffs kann ermittelt werden, dass die Poren des porösen Substrats ungefüllt sind und durch die TaC-Schicht verschlossen sind. Hieraus kann abgeleitet werden, dass keines der Agglomerate der wässrigen Suspension in die Poren des porösen Substrats gelangt ist und somit jedes der Agglomerate größer ist als der Poreneingangsdurchmesser jeder der Poren des porösen Substrats.

Ferner werden anhand des Querschliffs die mittlere Schichtdicke der TaC-Schicht sowie die Standardabweichung der mittleren Schichtdicke bestimmt. Hierfür werden an mindestens 25 Messstellen pro 1 cm Messbereich der Schicht Schichtdicken-Einzelmessungen vorgenommen, indem die Distanz zwischen Grenzfläche und Schichtoberfläche (Schichtdicke) anhand von aufgenommenen Querschliffsbildern gemessen wird, wobei die Abstände zwischen den einzelnen Messstellen regelmäßig sind. Auf diese Weise wird für die mittlere Schichtdicke derTaC-Schicht ein Wert von 50,9 µm bestimmt. Zudem wird eine Standardabweichung über alle Schichtdicken-Einzelmessungen von 2,7 µm (5,3 %) ermittelt.

Da die Standardabweichung nicht mehr als 6 % beträgt, handelt es sich bei der TaC-Schicht somit um eine homogene Schicht.

### Vergleichsbeispiel 1

Zunächst wird eine wässrige Suspension hergestellt, in dem eine Mischung hergestellt wird, die aus 80 Gew.-% TaC-Pulver, 1 Gew.-% Polyvinylalkohol und 19 Gew.-% Wasser besteht, und die Mischung dann für eine Standzeit von 8 Minuten ohne Rühren stehen gelassen wird. Hierbei bilden die TaC-Partikel des TaC-Pulvers in der wässrigen Suspension Agglomerate. Die so hergestellte wässrige Suspension wird schichtförmig auf ein poröses Graphit-Substrat (mittlerer Poreneingangsdurchmesser: 1,8 µm, Korngröße: 10 µm, Rₐ: 1,5 µm) aufgebracht. Im Anschluss wird das mit der wässrigen Suspension versehene Substrat einem Sinterprozess unterzogen, welcher bei einer Temperatur von 2300 °C, mit einer Haltezeit von 10 h und bei einem Druck von 1 bar erfolgt.

Auf diese Weise wird ein beschichtetes Graphit-Substrat erhalten, das ein poröses Graphit-Substrat und eine darauf angeordnete TaC-Schutzschicht umfasst. Die TaC-Schicht weist ein Korngefüge aus isometrischen Körnern auf.

Zur Untersuchung des beschichteten Substrats wird ein Querschliff des beschichteten Substrats hergestellt. Ein Bild dieses Querschliffs ist in Fig. 5 dargestellt.

Mittels einer REM-Aufnahme des Querschliffs kann ermittelt werden, dass die Poren des porösen Substrats teilweise mit dem Material der TaC-Schicht gefüllt sind. Hieraus kann abgeleitet werden, dass Agglomerate der wässrigen Suspension in die Poren des porösen Substrats gelangt sind und somit nicht jedes der Agglomerate größer ist als der Poreneingangsdurchmesser jeder der Poren des porösen Substrats. Im Vergleich mit den Ausführungsbeispielen 1 und 2 ist dies insbesondere darauf zurückzuführen, dass das im Vergleichsbeispiel 1 verwendete Graphit-Substrat größere Poren und damit auch größere Poreneingangsdurchmesser aufweist.

Ferner werden anhand des Querschliffs die mittlere Schichtdicke der TaC-Schicht sowie die Standardabweichung der mittleren Schichtdicke bestimmt. Hierfür werden an mindestens 25 Messstellen pro 1 cm Messbereich der Schicht Schichtdicken-Einzelmessungen vorgenommen, indem die Distanz zwischen Grenzfläche und Schichtoberfläche (Schichtdicke) anhand von aufgenommenen Querschliffsbildern gemessen wird, wobei die Abstände zwischen den einzelnen Messstellen regelmäßig sind. Auf diese Weise wird für die mittlere Schichtdicke derTaC-Schicht ein Wert von 44,7 µm bestimmt. Zudem wird eine Standardabweichung über alle Schichtdicken-Einzelmessungen von 5,3 µm (11,8 %) ermittelt.

Da die Standardabweichung mehr als 6 % beträgt, handelt es sich bei der TaC-Schicht somit um eine inhomogene Schicht.

### Vergleichsbeispiel 2

Zunächst wird eine wässrige Suspension hergestellt, in dem eine Mischung hergestellt wird, die aus 80 Gew.-% TaC-Pulver, 1 Gew.-% Polyvinylalkohol und 19 Gew.-% Wasser besteht, und die Mischung dann für eine Standzeit von 8 Minuten ohne Rühren stehen gelassen wird. Hierbei bilden die TaC-Partikel des TaC-Pulvers in der wässrigen Suspension Agglomerate. Die so hergestellte wässrige Suspension wird schichtförmig auf ein poröses Graphit-Substrat (mittlerer Poreneingangsdurchmesser: 3,3 µm, Korngröße: 20 µm, Rₐ: 1,5 µm) aufgebracht. Im Anschluss wird das mit der wässrigen Suspension versehene Substrat einem Sinterprozess unterzogen, welcher bei einer Temperatur von 2300 °C, mit einer Haltezeit von 10 h und bei einem Druck von 1 bar erfolgt.

Auf diese Weise wird ein beschichtetes Graphit-Substrat erhalten, das ein poröses Graphit-Substrat und eine darauf angeordnete TaC-Schutzschicht umfasst. Die TaC-Schicht weist ein Korngefüge aus isometrischen Körnern auf.

Zur Untersuchung des beschichteten Substrats wird ein Querschliff des beschichteten Substrats hergestellt. Ein Bild dieses Querschliffs ist in Fig. 6 dargestellt.

Mittels einer REM-Aufnahme des Querschliffs kann ermittelt werden, dass die Poren des porösen Substrats teilweise mit dem Material der TaC-Schicht gefüllt sind. Hieraus kann abgeleitet werden, dass Agglomerate der wässrigen Suspension in die Poren des porösen Substrats gelangt sind und somit nicht jedes der Agglomerate größer ist als der Poreneingangsdurchmesser jeder der Poren des porösen Substrats. Im Vergleich mit den Ausführungsbeispielen 1 und 2 ist dies insbesondere darauf zurückzuführen, dass das im Vergleichsbeispiel 2 verwendete Graphit-Substrat größere Poren und damit auch größere Poreneingangsdurchmesser aufweist.

Ferner werden anhand des Querschliffs die mittlere Schichtdicke der TaC-Schicht sowie die Standardabweichung der mittleren Schichtdicke bestimmt. Hierfür werden an mindestens 25 Messstellen pro 1 cm Messbereich der Schicht Schichtdicken-Einzelmessungen vorgenommen, indem die Distanz zwischen Grenzfläche und Schichtoberfläche (Schichtdicke) anhand von aufgenommenen Querschliffsbildern gemessen wird, wobei die Abstände zwischen den einzelnen Messstellen regelmäßig sind. Auf diese Weise wird für die mittlere Schichtdicke der TaC-Schicht ein Wert von 30,7 µm bestimmt. Zudem wird eine Standardabweichung über alle Schichtdicken-Einzelmessungen von 5,5 µm (18 %) ermittelt.

Da die Standardabweichung mehr als 6 % beträgt, handelt es sich bei der TaC-Schicht somit um eine inhomogene Schicht.

## Patentansprüche

1. Verfahren zur Herstellung von beschichteten Substraten, bei welchem
a) mindestens eine wässrige Suspension hergestellt wird, die Wasser, mindestens einen Agglomeratbildner und Partikel mindestens eines Refraktärmetallcarbids enthält, wobei die Partikel des mindestens einen Refraktärmetallcarbids in der mindestens einen wässrigen Suspension Agglomerate bilden,
b) die mindestens eine wässrige Suspension auf ein poröses Substrat aufgebracht wird, und
c) das Substrat nach Schritt b) einem Sinterprozess unterzogen wird, wobei der Durchmesser jedes der Agglomerate größer ist als der Poreneingangsdurchmesser jeder der Poren des porösen Substrats.

2. Verfahren nach dem vorhergehenden Anspruch, **dadurch gekennzeichnet, dass**
- das poröse Substrat ein Material enthält oder aus diesem besteht, welches ausgewählt ist aus der Gruppe bestehend aus Graphit, bevorzugt iso-Graphit, kohlenfaserverstärktem Kohlenstoff (CFC), C/SiC-Faserverbundwerkstoffen, SiC/SiC-Faserverbundwerkstoffen, carbidischen Keramiken, nitridischen Keramiken, oxidischen Keramiken, und Mischungen hiervon, und/oder
- das mindestens eine Refraktärmetallcarbid ausgewählt ist aus der Gruppe bestehend aus Titancarbiden, Zirconiumcarbiden, Hafniumcarbiden, Vanadiumcarbiden, Niobcarbiden, Tantalcarbiden, Chromcarbiden, Molybdäncarbiden, Wolframcarbiden, und Mischungen hiervon, und/oder
- der mindestens eine Agglomeratbildner ausgewählt ist aus der Gruppe bestehend aus Tetrabutylammoniumhydroxid, Polyvinylalkoholen und Mischungen hiervon.

3. Verfahren nach einem der vorhergehenden Ansprüche, **dadurch gekennzeichnet, dass**
- der Durchmesser der Agglomerate mindestens 20 µm, bevorzugt mindestens 10 µm, besonders bevorzugt mindestens 5 µm, beträgt, und/oder
- der Poreneingangsdurchmesser der Poren des porösen Substrats höchstens 19 µm, bevorzugt höchstens 9 µm, besonders bevorzugt höchstens 4 µm, beträgt.

4. Verfahren nach einem der vorhergehenden Ansprüche, **dadurch gekennzeichnet, dass** die Herstellung der mindestens einen wässrigen Suspension in Schritt a) dadurch erfolgt, dass zunächst eine Mischung hergestellt wird, die die Komponenten der herzustellenden wässrigen Suspension enthält, und die Mischung dann für eine Standzeit von 3 Minuten bis 30 Minuten, bevorzugt von 5 Minuten bis 15 Minuten, ohne Rühren stehen gelassen wird.

5. Verfahren nach einem der vorhergehenden Ansprüche, **dadurch gekennzeichnet, dass** die mindestens eine wässrige Suspension 0,05 bis 1 Gew.-% mindestens eines Bindemittels, bezogen auf das Gesamtgewicht der wässrigen Suspension, enthält, wobei das mindestens eine Bindemittel vorzugsweise ausgewählt ist aus der Gruppe bestehend aus Polyvinylalkoholen, Natriumbiphenyl-2-yloxiden, und Mischungen hiervon.

6. Verfahren nach einem der vorhergehenden Ansprüche, **dadurch gekennzeichnet, dass** die Oberfläche des porösen Substrats, auf welcher die mindestens eine wässrige Suspension abgeschieden wird, einen Mittenrauwert aufweist, der maximal 3 µm, bevorzugt von 0,5 µm bis 3 µm, besonders bevorzugt von 1 µm bis 3 µm, beträgt, und/oder eine gemittelte Rautiefe aufweist, die maximal 12 µm, bevorzugt von 1 µm bis 12 µm, besonders bevorzugt von 3 µm bis 12 µm, beträgt.

7. Verfahren nach einem der vorhergehenden Ansprüche, **dadurch gekennzeichnet, dass** die mittlere Partikelgröße der Partikel des mindestens einen Refraktärmetallcarbids größer ist als der mittlere Poreneingangsdurchmesser der Poren des porösen Substrats.

8. Verfahren nach einem der vorhergehenden Ansprüche, **dadurch gekennzeichnet, dass** die Herstellung der mindestens einen wässrigen Suspension in Schritt a) ein Vermischen der Komponenten der herzustellenden mindestens einen wässrigen Suspension mithilfe eines Dispergiergeräts umfasst, wobei das Vermischen mithilfe des Dispergiergeräts vorzugsweise unter Verwendung von Mahlkörpern und/oder über einen Zeitraum von mindestens 12 Stunden erfolgt.

9. Verfahren nach einem der vorhergehenden Ansprüche, **dadurch gekennzeichnet, dass** das Aufbringen der mindestens einen wässrigen Suspension in Schritt b) mittels Tauchen, Pinseln oder Sprühauftragung, vorzugsweise mittels Sprühauftragung, erfolgt.

10. Verfahren nach einem der vorhergehenden Ansprüche, **dadurch gekennzeichnet, dass** die mindestens eine wässrige Suspension
- 60 bis 90 Gew.-%, bevorzugt 70 bis 85 Gew.-%, der Partikel des mindestens einen Refraktärmetallcarbids, bezogen auf das Gesamtgewicht der wässrigen Suspension, und/oder
- 0,1 bis 2 Gew.-%, bevorzugt 0,1 bis 1 Gew.-%, des mindestens einen Agglomeratbildners, bezogen auf das Gesamtgewicht der wässrigen Suspension, enthält.

11. Verfahren nach einem der vorhergehenden Ansprüche, **dadurch gekennzeichnet, dass** der Sinterprozess in Schritt c)
- bei einer Temperatur von 2100 °C bis 2500 °C, bevorzugt von 2200 °C bis 2400 °C, und/oder
- mit einer Haltezeit von 1 h bis 15 h, bevorzugt von 2 h bis 10 h, und/oder
- bei einem Druck von 0,1 bar bis 10 bar, bevorzugt 0,7 bar bis 5 bar, und/oder
- unter Argon-Atmosphäre,
erfolgt.

12. Beschichtetes Substrat, umfassend ein poröses Substrat und mindestens eine auf dem porösen Substrat angeordnete Schicht, die mindestens ein Refraktärmetallcarbid enthält oder daraus besteht, wobei die mindestens eine auf dem porösen Substrat angeordnete Schicht ein Korngefüge aus isometrischen Körnern, die ein Kornaspektverhältnis von mindestens 0,95 aufweisen, aufweist, und wobei das poröse Substrat ungefüllte Poren aufweist, die durch die mindestens eine auf dem porösen Substrat angeordnete Schicht verschlossen sind.

13. Beschichtetes Substrat nach Anspruch 12, **dadurch gekennzeichnet, dass**
- die mindestens eine auf dem porösen Substrat angeordnete Schicht eine mittlere Schichtdicke von mindestens 20 µm, bevorzugt von 20 µm bis 150 µm, besonders bevorzugt von 30 µm bis 100 µm, aufweist, und/oder
- die Standardabweichung der mittleren Schichtdicke der mindestens einen auf dem porösen Substrat angeordneten Schicht maximal 6 % beträgt, bevorzugt im Bereich von 0,5 % bis 6 % liegt, besonders bevorzugt im Bereich von 1 % bis 6 % liegt.

14. Beschichtetes Substrat nach Anspruch 12 oder 13, **dadurch gekennzeichnet, dass** das beschichtete Substrat mit einem Verfahren gemäß einem der Ansprüche 1 bis 11 herstellbar oder hergestellt ist.

15. Verwendung eines beschichteten Substrats nach einem der Ansprüche 12 bis 14 in der Halbleiterkristallzüchtung, wobei es sich bei dem beschichteten Substrat vorzugsweise um einen beschichteten Tiegel handelt.

## Claims

1. A method for preparing coated substrates, in which
a) at least one aqueous suspension is prepared, the aqueous suspension containing water, at least one agglomerate former and particles of at least one refractory metal carbide, the particles of the at least one refractory metal carbide forming agglomerates in the at least one aqueous suspension,
b) the at least one aqueous suspension being applied to a porous substrate, and
c) the substrate being subjected to a sintering process after step b),
the diameter of each of the agglomerates being greater than the pore entrance diameter of each of the pores of the porous substrate.

2. The method according to the preceding claim, **characterized in that**
- the porous substrate contains or consists of a material selected from the group consisting of graphite, preferably iso-graphite, carbon fiber reinforced carbon (CFC), C/SiC fiber composites, SiC/SiC fiber composites, carbidic ceramics, nitridic ceramics, oxidic ceramics, and mixtures thereof, and/or
- the at least one refractory metal carbide is selected from the group consisting of titanium carbides, zirconium carbides, hafnium carbides, vanadium carbides, niobium carbides, tantalum carbides, chromium carbides, molybdenum carbides, tungsten carbides, and mixtures thereof, and/or
- the at least one agglomerate former is selected from the group consisting of tetrabutylammonium hydroxide, polyvinyl alcohols and mixtures thereof.

3. The method according to any one of the preceding claims, **characterized in that**
- the diameter of the agglomerates is at least 20 µm, preferably at least 10 µm, particularly preferably at least 5 µm, and/or
- the pore entrance diameter of the pores of the porous substrate is at most 19 µm, preferably at most 9 µm, particularly preferably at most 4 µm.

4. The method according to any one of the preceding claims, **characterized in that** the at least one aqueous suspension is prepared in step a) by first preparing a mixture containing the components of the aqueous suspension to be prepared and then allowing the mixture to stand for a standing time of 3 minutes to 30 minutes, preferably of 5 minutes to 15 minutes, without stirring.

5. The method according to any one of the preceding claims, **characterized in that** the at least one aqueous suspension contains 0.05 to 1% by weight of at least one binder, based on the total weight of the aqueous suspension, wherein the at least one binder is preferably selected from the group consisting of polyvinyl alcohols, sodium biphenyl-2-yl oxides, and mixtures thereof.

6. The method according to any one of the preceding claims, **characterized in that** the surface of the porous substrate on which the at least one aqueous suspension is deposited has a mean roughness value of at most 3 µm, preferably from 0.5 µm to 3 µm, particularly preferably from 1 µm to 3 µm, and/or has a mean depth of roughness of at most 12 µm, preferably from 1 µm to 12 µm, particularly preferably from 3 µm to 12 µm.

7. The method according to any one of the preceding claims, **characterized in that** the mean particle size of the particles of the at least one refractory metal carbide is greater than the mean pore entrance diameter of the pores of the porous substrate.

8. The method according to any one of the preceding claims, **characterized in that** the preparation of the at least one aqueous suspension in step a) comprises mixing the components of the at least one aqueous suspension to be prepared with the aid of a dispersing device, wherein the mixing with the aid of the dispersing device preferably is carried out with use of grinding media and/or over a period of at least 12 hours.

9. The method according to any one of the preceding claims, **characterized in that** the at least one aqueous suspension is applied in step b) by means of dipping, brushing or spray application, preferably by means of spray application.

10. The method according to any one of the preceding claims, **characterized in that** the at least one aqueous suspension
- contains 60 to 90% by weight, preferably 70 to 85% by weight, of the particles of the at least one refractory metal carbide, based on the total weight of the aqueous suspension, and/or
- 0.1 to 2% by weight, preferably 0.1 to 1% by weight, of the at least one agglomerate former, based on the total weight of the aqueous suspension.

11. The method according to any one of the preceding claims, **characterized in that** the sintering process in step c) takes place
- at a temperature of from 2100°C to 2500°C, preferably from 2200°C to 2400°C, and/or
- with a holding time of 1 hour to 15 hours, preferably of 2 hours to 10 hours, and/or
- at a pressure of 0.1 bar to 10 bar, preferably 0.7 bar to 5 bar, and/or
- under argon atmosphere.

12. A coated substrate comprising a porous substrate and at least one layer arranged on the porous substrate, the at least one layer arranged on the porous substrate containing or consisting of at least one refractory metal carbide, the at least one layer arranged on the porous substrate having a grain structure of isometric grains, which have a grain aspect ratio of at least 0.95, and the porous substrate having unfilled pores closed by the at least one layer arranged on the porous substrate.

13. The coated substrate according to claim 12, **characterized in that**
- the at least one layer arranged on the porous substrate has a mean layer thickness of at least 20 µm, preferably from 20 µm to 150 µm, particularly preferably from 30 µm to 100 µm, and/or
- the standard deviation of the mean layer thickness of the at least one layer arranged on the porous substrate is at most 6%, preferably in the range from 0.5% to 6%, particularly preferably in the range from 1% to 6%.

14. The coated substrate according to claim 12 or 13, **characterized in that** the coated substrate can be prepared or is prepared using a method according to any one of claims 1 to 11.

15. A use of a coated substrate according to any one of claims 12 to 14 in semiconductor crystal growing, the coated substrate preferably being a coated crucible.

## Revendications

1. Procédé de fabrication de substrats revêtus, selon lequel
a) au moins une suspension aqueuse est préparée qui contient de l'eau, au moins un agent de formation d'agglomérats et des particules d'au moins un carbure métallique réfractaire, dans lequel les particules du au moins un carbure métallique réfractaire forment des agglomérats dans la au moins une suspension aqueuse,
b) la au moins une suspension aqueuse est appliquée sur un substrat poreux, et
c) le substrat est soumis à un processus de frittage après l'étape b),
dans lequel le diamètre de chacun des agglomérats est supérieur au diamètre d'entrée de pores de chacun des pores du substrat poreux.

2. Procédé selon la revendication précédente, **caractérisé en ce que**
- le substrat poreux contient ou est constitué d'un matériau, lequel est choisi dans le groupe constitué par le graphite, de préférence l'iso-graphite, le carbone renforcé par des fibres de carbone (CFC), les matériaux composites renforcés par des fibres C/SiC, les matériaux composites renforcés par des fibres SiC/SiC, les céramiques à base de carbure, les céramiques à base de nitrure, les céramiques à base d'oxyde, et les mélanges de ceux-ci, et/ou
- le au moins un carbure métallique réfractaire est choisi dans le groupe constitué par les carbures de titane, les carbures de zirconium, les carbures d'hafnium, les carbures de vanadium, les carbures de niobium, les carbures de tantale, les carbures de chrome, les carbures de molybdène, les carbures de tungstène, et des mélanges de ceux-ci, et/ou
- le au moins un agent de formation d'agglomérats est choisi dans le groupe constitué par l'hydroxyde de tétrabutylammonium, les alcools polyvinyliques et des mélanges de ceux-ci.

3. Procédé selon l'une quelconque des revendications précédentes, **caractérisé en ce que**
- le diamètre des agglomérats est d'au moins 20 µm, de préférence d'au moins 10 µm, de manière particulièrement préférée d'au moins 5 µm, et/ou
- le diamètre d'entrée de pores des pores du substrat poreux est d'au plus 19 µm, de préférence d'au plus 9 µm, de manière particulièrement préférée d'au plus 4 µm.

4. Procédé selon l'une quelconque des revendications précédentes, **caractérisé en ce que** la préparation de la au moins une suspension aqueuse à l'étape a) s'effectue du fait que tout d'abord un mélange est préparé, qui contient les composants de la suspension aqueuse à préparer, et le mélange est ensuite laissé reposer sans agitation pendant un temps de repos de 3 minutes à 30 minutes, de préférence de 5 minutes à 15 minutes.

5. Procédé selon l'une quelconque des revendications précédentes, **caractérisé en ce que** la au moins une suspension aqueuse contient de 0,05 à 1 % en poids d'au moins un liant, par rapport au poids total de la suspension aqueuse, dans lequel le au moins un liant est de préférence choisi dans le groupe constitué par les alcools polyvinyliques, les biphényl-2-yloxydes de sodium, et les mélanges de ceux-ci.

6. Procédé selon l'une quelconque des revendications précédentes, **caractérisé en ce que** la surface du substrat poreux sur laquelle est déposée la au moins une suspension aqueuse présente une rugosité moyenne qui est au maximum de 3 µm, de préférence de 0,5 µm à 3 µm, de manière particulièrement préférée de 1 µm à 3 µm, et/ou présente une profondeur de rugosité moyenne qui est au maximum de 12 µm, de préférence de 1 µm à 12 µm, de manière particulièrement préférée de 3 µm à 12 µm.

7. Procédé selon l'une quelconque des revendications précédentes, **caractérisé en ce que** la taille moyenne de particule des particules du au moins un carbure métallique réfractaire est supérieure au diamètre d'entrée de pores moyen du substrat poreux.

8. Procédé selon l'une quelconque des revendications précédentes, **caractérisé en ce que** la préparation de la au moins une suspension aqueuse à l'étape a) comprend un mélange des composants de la au moins une suspension aqueuse à préparer à l'aide d'un appareil de dispersion, dans lequel le mélange s'effectue à l'aide de l'appareil de dispersion de préférence au moyen de corps de broyage et/ou pendant une période d'au moins 12 heures.

9. Procédé selon l'une quelconque des revendications précédentes, **caractérisé en ce que** l'application de la au moins une suspension aqueuse à l'étape b) s'effectue par trempage, au pinceau ou par application par pulvérisation, de préférence par application par pulvérisation.

10. Procédé selon l'une quelconque des revendications précédentes, **caractérisé en ce que** la au moins une suspension aqueuse contient
- 60 à 90 % en poids, de préférence 70 à 85 % en poids, des particules du au moins un carbure métallique réfractaire, par rapport au poids total de la suspension aqueuse, et/ou
- 0,1 à 2 % en poids, de préférence 0,1 à 1 % en poids, du au moins un agent de formation d'agglomérats, par rapport au poids total de la suspension aqueuse.

11. Procédé selon l'une quelconque des revendications précédentes, **caractérisé en ce que** le processus de frittage à l'étape c) s'effectue
- à une température de 2100 °C à 2500 °C, de préférence de 2200 °C à 2400 °C, et/ou
- avec un temps de repos de 1 h à 15 h, de préférence de 2 h à 10 h, et/ou
- à une pression de 0,1 bar à 10 bars, de préférence de 0,7 bar à 5 bars, et/ou
- sous atmosphère d'argon,

12. Substrat revêtu, comprenant un substrat poreux et au moins une couche disposée sur le substrat poreux, qui contient au moins un carbure métallique réfractaire ou en est constituée, dans lequel la au moins une couche disposée sur le substrat poreux a une structure granulaire composée de grains isométriques, qui ont un rapport d'aspect d'au moins 0,95, et dans lequel le substrat poreux a des pores non remplis qui sont fermés par la au moins une couche disposée sur le substrat poreux.

13. Substrat revêtu selon la revendication 12, **caractérisé en ce que**
- la au moins une couche disposée sur le substrat poreux présente une épaisseur de couche moyenne d'au moins 20 µm, de préférence de 20 µm à 150 µm, de manière particulièrement préférée de 30 µm à 100 µm, et/ou
- l'écart-type de l'épaisseur de couche moyenne de la au moins une couche disposée sur le substrat poreux est de 6 % au maximum, de préférence se situe dans la plage de 0,5 % à 6 %, de manière particulièrement préférée se situe dans la plage de 1 % à 6 %.

14. Substrat revêtu selon la revendication 12 ou 13, **caractérisé en ce que** le substrat revêtu peut être obtenu ou est obtenu avec un procédé selon l'une quelconque des revendications 1 à 11.

15. Utilisation d'un substrat revêtu selon l'une quelconque des revendications 12 à 14 dans la croissance de cristaux semi-conducteurs, dans laquelle le substrat revêtu est de préférence un creuset revêtu.
